# EUROPEAN PATENT APPLICATION

(11) **EP 4 712 486 A1**
(43) Date of publication of application: **18.03.2026**
(21) Application number: 25201948.4
(22) Date of filing: 12.09.2025
(51) Int. Cl.: H04N 21/2343, H04N 21/845

(54) **IMPROVING INGRESS BANDWIDTH USE FOR STREAMING CONTENT DISTRIBUTION**

(30) Priority: 13.09.2024 IT 202400020497
(71) Applicant: Sky Italia S.r.L., 20138 Milano (IT)
(72) Inventor: Bertolotti, Massimo, 20138 Milano (IT); Mazzeo, Gaetano, 20138 Milano (IT); Sonnati, Fabio, 20138 Milano (IT)
(74) Representative: Hoffmann Eitle

(57) **Abstract**

Method for distributing a streaming audiovisual content available in a plurality of versions, in which each version has a respective bitrate requirement and wherein said method comprises the steps of:
- receiving (S1) a plurality of requests for the audiovisual content, each request indicating a respective version of the content;
- determining (S2), for each group among a plurality of groups, a respective version of the content representing the group, wherein the plurality of groups is fewer in number than the plurality of versions;
- assigning (S3) each received request to a respective group that corresponds to the version of the content indicated by the respective request;
- obtaining (S4) the content in the versions of the content representing each group; and
- providing (S5), to each requester of the content, said content obtained in the version representing the assigned group.

## Description

### FIELD OF THE INVENTION

The present invention relates to a method, device and system for the efficient use of incoming network bandwidth for the distribution of streaming content.

### BACKGROUND OF THE INVENTION

In some cases, a plurality of users share a connection to a communication network. This happens, for example, for customers connected to a network provided in a facility (hotel, hospital, conference centre, workplace), on a public transport means (ship, train, etc.), or from a telephone cell. Data transmissions between users and the communication network all run through a single connection (e.g. an optical fibre or a satellite connection) with a limited bandwidth, which the users must share with each other. Users can request the same audiovisual streaming content provided on the communication network. In the adaptive bitrate streaming (ADR), the content is provided in different versions (i.e. "renditions"), for example using images with different resolutions, and/or using different codecs to encode the content and/or images per second (i.e. "frames per second", FPS), to meet the different needs of the users.

### SUMMARY OF THE INVENTION

There may be situations and contexts in which it is very complex to maintain a high or even satisfactory quality of the service. The availability of bandwidth has always been the element that most affects the quality of the video delivered: moving from fixed-band transmission channels, such as satellite or digital terrestrial, to random-band channels such as those based on IP, has made it crucial to adapt the characteristics of the stream to the real and variable bandwidth conditions that the user can experience at any time. However, as a result of the multiplication of the versions and the number of users requiring audiovisual content, data transmissions to obtain the content of all users increase considerably. This comes from the fact that, typically, the users detect bandwidth conditions and choose the version of the content whose bitrate requirement is the most suitable for the local bandwidth conditions detected.

This results in an inefficient use of the network bandwidth and also carries a risk of deterioration in the quality of the streaming service. Unstructured access by the users to the various renditions of the content, even if a caching layer is inserted between the CDN network and the content requesters, would lead to a rapid saturation of the limited access channel.

The object of the present invention is the efficient use of incoming network bandwidth for the distribution of streaming content. The object is achieved by the independent claims. Advantageous embodiments are defined by the dependent claims. Furthermore, aspects are provided for explanatory purposes as follows:
A1. Method for distributing a streaming audiovisual content available in a plurality of versions, in which each version has a respective bitrate requirement and wherein said method comprises the steps of:
   - receiving (S1) a plurality of requests for the audiovisual content (e.g. within a predefined time frame), each request indicating a respective version of the content;
   - determining (S2), for each group among a plurality of groups, a respective version of the content representing the group, wherein the plurality of groups is fewer in number than the plurality of versions;
   - assigning (S3) each received request to a respective group that corresponds to the version of the content indicated by the respective request (for example based on the bitrate requirement of the version indicated by the respective request);
   - obtaining (S4) (e.g. from a content distribution network) the content in the versions of the content representing each group; and
   - providing (S5), to each requester of the content, said content obtained in the version representing the assigned group.
A2. Method according to aspect A1, wherein, for each group, the version representing the group of one of the plurality of groups corresponds to that (to the version of the content) with the minimal bitrate requirement, among the versions indicated by the requests assigned to the group.
A3. Method according to aspect A1 or aspect A2, wherein each group corresponds to a respective interval of bitrate values.
A4. Method according to aspect A3, wherein the respective interval of bitrate values of at least one of the groups is predefined.
A5. Method according to aspect 3 or aspect 4, wherein the respective interval of bitrate values of at least one of the groups is defined dynamically, preferably based on at least one of: the respective version indicated by each of the plurality of requests received, a measure indicating the conditions of the network and the data associated to a list of segments of the audiovisual content.
A6. Method according to any one of aspects from A3 to A5, wherein the bitrate interval of at least one of the groups has a respective length less than a predetermined threshold.
A7. Method according to aspect A6, wherein the predetermined threshold corresponds to a maximum difference between the respective bitrate requirement of two versions of the content corresponding to the same group.
A8. Method according to any one of aspects from A1 to A7, wherein one of the groups corresponds to a minimal bitrate requirement among the versions of the content.
A9. Method according to any one of aspects from A1 to A8, wherein an overall bitrate value is determined, and
   at least one of the number of groups and the respective representative version of each group is determined to limit a sum of the bitrate requirement of the respective representative version of each group to the overall bitrate value.
A10. Method according to any one of aspects from A1 to A9, wherein each of the plurality of requests originates from a respective user device.
A11. Method according to any one of aspects from A1 to A10, wherein for each version of the content a respective plurality of segments to be reproduced in sequence is defined and wherein each request indicates one or more of the segments in the corresponding version.
A12. Method according to any one of aspects from A1 to A11, wherein obtaining the content in the representative versions of each group comprises the steps of:
   - transmitting, to a server of a content distribution network, a request for the content in the representative version, and
   - receiving the content in the representative version from the server.
A13. Method according to any one of aspects from A1 to A12, wherein the plurality of groups is fewer in number than the plurality of versions starting from the moment in which a number of requests corresponding to two or more versions of the content, preferably three or more versions of said content, has been received.
A14. Method according to any one of aspects from A1 to A13, wherein each group is to regroup requests corresponding to two or more versions of said content.
A15. Method of any one of aspects from A1 to A14, wherein the plurality of groups is fewer in number than the plurality of requests received.
A16. Method according to any one of aspects from A1 to A15, wherein
   the method further comprises the step of determining (S6) whether a sum of the respective bitrate requirements for each of the plurality of requests exceeds a predetermined value, and
   the steps of determining (S2) the respective version of the content representing the group, assigning (S3) each received request to a respective group, obtaining (S4) the content in the versions of the content representing each group, and providing (S5) to each requester of the content said content obtained in the version representing the assigned group are performed only if the sum of the respective bitrate requirements exceeds the predetermined value.
A17. Method according to aspect A16, wherein, if the sum of the respective bitrate requirements for each of the plurality of requests does not exceed a predetermined value, the method comprises the steps of:
   - obtaining (S7) the content in the versions indicated by each request; and
   - providing (S8), to each requester of the content, said content obtained in the version indicated by the request corresponding to the requester.
A18. Method according to any one of aspects from A1 to A17, wherein the step of receiving the plurality of requests for the audiovisual content comprises the step of temporally aligning the plurality of requests.
A19. Method according to aspect A18, wherein the time alignment between two of the plurality of requests is obtained by delaying a response to the request received first.
A20. Method according to any one of aspects from A1 to A19, wherein the method is executed in an edge server of a content delivery network (CDN) and/or in a routing device provided at a utility.
A21. Network device configured to execute the method according to any one of aspects from A1 to A20.
A22. Device for distributing a streaming audiovisual content available in a plurality of versions, in which each version has a respective bitrate requirement, wherein the device comprises:
   reception means (interface) for receiving a plurality of requests for the audiovisual content, each request indicating a respective version of the content;
   determination means (data processor/processor) for determining, for each group among a plurality of groups, a respective version of the content representing the group, wherein the plurality of groups is fewer in number than the plurality of versions;
   assignment means (data processor/processor) for assigning each received request to a respective group that corresponds to the version of the content indicated by the respective request;
   obtention means (interface) for obtaining the content in the versions of the content representing each group; and
   provision means (interface) for providing, to each requester of the content, said content obtained in the version representing the assigned group.
A23. Device according to aspect A22, wherein the device comprises an edge router of a content delivery network.
A24. Device according to aspect A22 or A23, wherein the device is configured to be installed at a utility.
A25. Device according to aspect A22, wherein the device is configured to be part of an edge router of a content delivery network or of an apparatus installed at a utility.
A26. Communication network for distributing streaming content comprising the device according to any one of aspects from A21 to A25.
A27. Computer program comprising instructions configured to execute, when said program is executed on one or more data processors, all the steps of the method according to any one of aspects from A1 to A20.

### LIST OF FIGURES

Figure 1 depicts a flowchart of a method according to an embodiment of the present invention;
Figure 2 depicts a diagram of a regrouping of requests for an audiovisual content according to an embodiment of the present invention;
Figure 3 depicts examples of time sequences of requests transmitted by respective users for an audiovisual content according to an embodiment of the present invention;
Figure 4 depicts an example of a time sequence of requests transmitted by a user for an audiovisual content according to an embodiment of the present invention;
Figure 5 depicts a block diagram of a system illustrating an example of reception of requests for an audiovisual content;
Figure 6 depicts a block diagram of a system illustrating an example of reception of requests for an audiovisual content according to an embodiment of the present invention;
Figures 7A, 7B and 7C depict block diagrams of a system illustrating examples of convergence of requests for an audiovisual content at full capacity according to embodiments of the present invention;
Figure 8 depicts a flowchart of a method according to an embodiment of the present invention;
Figure 9 depicts an example of a sequence of data transmissions in the preparation for distribution of an audiovisual content according to an embodiment of the present invention;
Figure 10 depicts a block diagram of a system according to an embodiment of the present invention; and
Figure 11 depicts a block diagram of a data processing device capable of implementing the present invention according to an embodiment.

### DETAILED DESCRIPTION

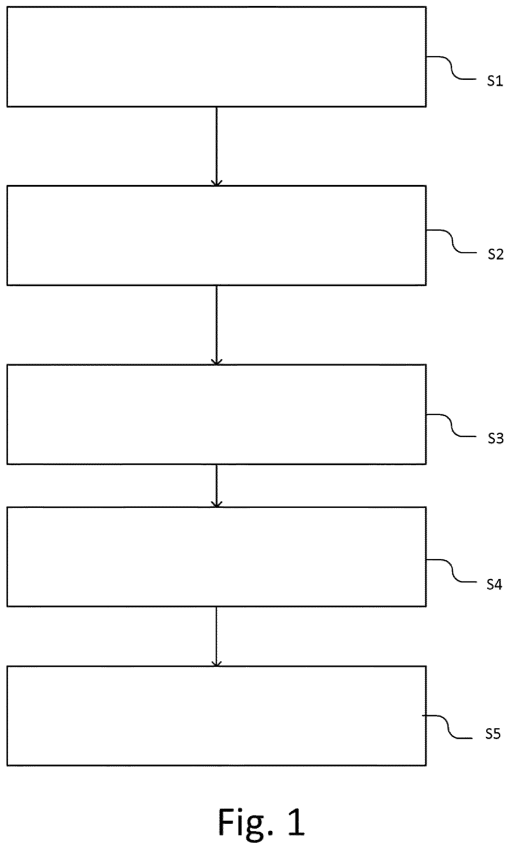

A first embodiment of the present invention will now be described with reference to figure 1, in which a flowchart of a method according to an embodiment of the present invention is illustrated.

The method is preferably executed in a situation where a plurality of users (i.e. content requesters) are connected to an audiovisual content provider via an input band with a limited capacity. A device in the local network receives the requests from the users and controls the transmission and reception of data to obtain content via the input band. In other words, the method may be executed at least in part in a device on the local network/user side of the input band.

Said method assists the efficient use of incoming network bandwidth for the distribution of streaming content and can be implemented in a network device positioned between an audiovisual content distribution network (CDN) and the users connected to the CDN network through the same connection, for example an edge server of the CDN network, a routing device provided to a utility (for example, implemented in a customer premise equipment, in a wireless router connected to the WAN network on one side and on a local network on the other side), etc.

A streaming audiovisual content is made available on the CDN network in a plurality of versions (i.e. "renditions"). Each version has respective features. Each version has a bitrate (or bandwidth) requirement necessary for reception of the content by means of a user device to process and/or reproduce the audiovisual content without interruption (i.e. lag). Each version may also have a respective resolution, and/or a respective audio codec and/or respective video codec, a frame rate, etc. Each user device may request the content in a preferred version, for example based on at least one of its own data transmission/reception capabilities, its own data processing capability, a data transmission rate ("data throughput") encountered by the device, a configuration of a software for reproducing the content (e.g. a configuration defined at least in part by a user of the device).

In the method, various devices communicate via various communication links. Each communication link may be a wireless communication link such as WLAN/Wi-Fi, a satellite communication link, a mobile data link such as LTE/5G, Bluetooth or Bluetooth Low Energy (BLE), a wired communication link such as DSL, fibre optic cable, Ethernet, etc. Each communication link may be temporary or permanent. The transmission of data relating to the streaming audiovisual content may take place using any suitable transmission protocol, preferably an ABR protocol such as HLS, MPEG-DASH, Smooth Streaming, etc. or a combination thereof.

Although the present disclosure relates to a streaming audiovisual content (or in streaming), the method is not limited to a streaming content. Instead, the method can be used for any type of audiovisual content that can be requested by several users at the same time, for example video-on-demand contents, improving the efficient use of incoming network bandwidth also for these types of contents. For example, when releasing a non-live video (a prerecorded video) that is expected to be popular, the users might request different versions of the same video more or less at the same time. In such cases, the use of the method may improve the efficiency in using the incoming band.

The method comprises the step of receiving (S1) a plurality of requests for the audiovisual content, each request indicating a respective version of the content.

Each of the plurality of requests originates from a respective user device used to exploit the content and is received by the user device directly or through an intermediate device (e.g. a router, a 4G/5G network station, etc.).

To facilitate their distribution, the audiovisual contents are preferably divided into segments, each comprising a number of frames. A list (also known as a manifest) is then generated in which the generated segments or at least a part of the segments are listed.

These segments are then transmitted via an appropriate protocol to the users. The various segments present in the list follow one another continuously, that is, they are organized in the list (for example numbered, or abiding by the order in which they appear in the list, etc.) in such a way that the same segments are reproduced in succession when they are received by the user device. In different versions of the same content, a segment may comprise a different number of frames (the segments are not necessarily aligned). Each request for an audiovisual content is therefore a request for at least one segment of the content in the requested version. A user device subsequently requests the segments of the audiovisual content according to the defined sequence.

The plurality of requests received in step S1 is therefore a plurality of requests obtained from different user devices more or less at the same time (i.e. within a specific time frame). For example, receiving a first request for content may begin within a predefined time frame (e.g., a time needed to process the data of the request), and all requests for the same content received before the predefined time frame elapses (i.e., within that time frame) are considered to be the plurality of requests received. Any request for the same content received after the time frame has elapsed may be handled as being part of another plurality of requests for the content.

The method comprises the step of determining (S2), for each group among a plurality of groups, a respective version of the content representing the group, wherein the plurality of groups is preferably fewer in number than the plurality of versions (at least after a first initialization step or at full capacity, as explained below).

The requested versions of the content are then regrouped into at least two different groups. For each group, only one version of the content is determined as the representative version of the same group. In other words, a respective version of the content is associated with each group (and therefore with each of the versions indicated in the plurality of requests received in step S1); each group is associated with a single version of the content. The representative version of a group is not necessarily one of the versions indicated in one of the requests received. For example, if a group is predefined (before receiving the requests), the representative version of the group may also be predetermined, before receiving any requests for the content.

As explained below, instead of managing all the requested versions, regrouping allows to manage the exchange of data in a single version for each group. So the number of groups remains fewer in number than the plurality of versions to reduce the number of the versions of the content that must be obtained in parallel. In some cases, during an initial step where the requests are received and assigned to different groups, it is possible that the number of requested versions remains equal to or less than a number of predefined groups. This initial step may last until a number of requests for two or three versions of the same content are received. Once this condition occurs, it can be considered that the system is "at full capacity" (without forgetting that the number of requests may continuously vary, as well as the number of the versions corresponding to requests for each group).

The method comprises the step of assigning (S3) each received request to a respective group that corresponds to the version of the content indicated by the respective request.

The number of groups is preferably defined as smaller than the number of the versions of the content, but may also be smaller than the number of received requests (i.e. of the plurality of requests received almost simultaneously or in the same time frame). In this case, two or more received requests are assigned to the same group (and therefore to the same representative version of the group).

The method comprises the step of obtaining (S4) the content in the group versions representing each group.

The device executing the method (thus receiving the requests for the content) may transmit a request for the content to the CDN communication network which provides the content, by making a single request covering all representative versions, or by making separate requests (in parallel or in sequence) to the CDN. In response to the request (or the requests), the device receives from the CDN network the content in the versions representing each group.

In this step, the data exchange is performed via the limited input band. Since the content is only obtained in the representative versions of each group, the amount of data that has to transit through the limited input band is reduced (compared to the case where the content is obtained in each requested version).

The method comprises the step of providing (S5), to each requester of the content, said content obtained in the version representing the assigned group.

The device executing the method forwards the content obtained in step S4 to each requester.

Each requester therefore receives the requested content, but in the version representing the group to which the request is assigned and not necessarily in the version indicated in the initial request (except in the case where the version indicated in a request coincides with the representative version of the group). From the foregoing, it is clear that the requester does not choose the group to which to assign its request, nor the representative version of that group. The process may be completely obscure to the requesters, except in the case of obvious differences between the version of the content indicated in the request and the version of the content actually received (i.e. the representative version of the group).

Each requester corresponds to a user device that reproduces for a user the content obtained in the representative version of the assigned group or to a network device (e.g. a router, switch, etc.) that acts as an intermediary between the device executing the method and one or more user devices that had requested the content.

The method described with reference to figure 1 may be repeated whenever requests for content in two or more versions are received together.

As explained above, the method allows to reduce the versions in which the same content is transmitted through the network (both through the limited input band and in the internal network) and to provide each requester with an adapted version of the content, even for those with reduced performance.

The inventors have identified the possibility not only of regrouping the requests by the same content but of manipulating the requests, modifying for some of them the version ("rendition") of the requested content with the aim of reducing the network resources (and in particular on the limited input band) used to obtain the content, while providing the content in a version close to that requested.

In the example explained above, the method is executed on a device in the local network (i.e., on the local network side of the input band). However, the invention is not limited to this possibility. The method may be executed at least in part in a device on the other side of the input band, i.e. the audiovisual content provider side. A request for a content needs only the transmission of text data that are typically small in size compared to the transmission of the content itself. It is therefore possible, in some cases, to transmit all requests via the input band, to a device (i.e. node) of a content distribution network (CDN network) such as an edge server of the CDN network. The CDN network node can regroup these requests, determine the versions representing each group, and transmit the content via the input band only in the representative versions.

The invention is not even limited to the execution of the method in a single device. For example, it is possible that the method is executed in multiple locations, particularly on both sides of the input band. For example, the CDN network node may determine the groups and indicate to a device on the local network side the groups and/or the respective versions representing each group. The device on the local network side can receive the requests and regroup the requests based on the indication received from the CDN network node, and transmit the requests for the content in the versions representing the groups.

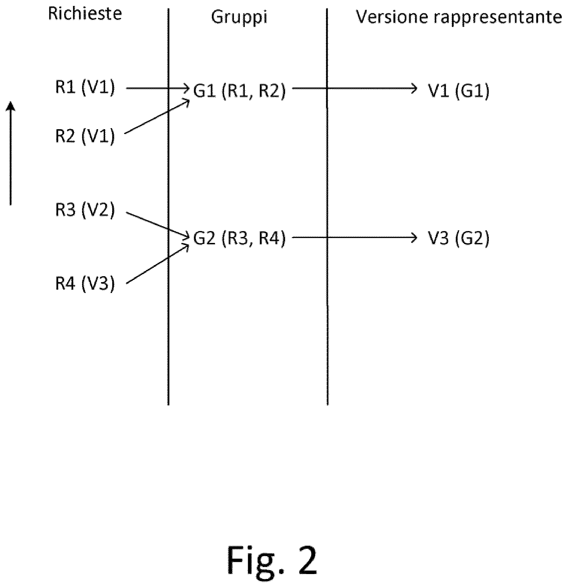

An example of the regrouping of requests in the first embodiment of the present invention will now be described with reference to figure 2, in which a block diagram of a regrouping of requests for an audiovisual content is illustrated.

In the example of figure 2, the plurality of requests received in step S1 includes four requests from R1 to R4. The requests R1 and R2 indicate the same version V1 of the content, the request R3 indicates the version V2 of the content, and the request R4 indicates the version V3 of the content. As indicated by the vertical arrow, the bitrate requirement of the version V1 is higher than that of the version V2, which in turn is higher than that of the version V3.

The group G1 corresponds to the version V1, so in step S3, the requests R1 and R2 are assigned to the same group G1. A second group G2 corresponds to both version V2 and version V3, so in step S3, the requests R3 and R4 are assigned to the group G2.

The version V1 is determined as representing the group G1, the version V3 is determined as representing the group G2. Consequently, the content is obtained in step s4 both in the version V1 (for all requests in the group G1) and in the version V3 (for all requests in the group G2), using an overall bitrate equal to the sum of the respective bitrate requirements of the versions V1 and V3, the sum being in any case lower than the case in which the version V2 should also be obtained via the limited input band.

Optionally, in the method of the present embodiment, for each group, the version representing the content of one of the plurality of groups corresponds to that with the minimal bitrate requirement, among the versions indicated by the requests assigned to the group. In this case, for each group, the version of the content obtained in step S4 and provided to the requesters in step S5 has the lowest bitrate requirement in the requests. Then, each requester receives the content in a version that has a bitrate requirement equal to or lower than that indicated in the request for the content. Consequently, each requester can receive the content using a bitrate supported by the connection between the requester and the device executing the method and thus each requester can receive (and reproduce) the content without interruption. One of the advantages of this choice lies in the fact that the device that manages these groups and/or the requests associated with these groups, does not need to perform any re-encoding; in fact, it will be sufficient to request the content with the minimal bitrate of the group, and route it to the devices of the group without audio/video re-encoding.

Optionally, one or more of the groups may have a version representing the content that does not have the minimal bitrate requirement among the versions of the content assigned to the group. In other words, for at least one of the groups, the version representing the group determined in step S2 may have a higher bitrate requirement than the bitrate requirement of another version assigned to the same group.

For example, the version representing the content for a group may correspond to an average version (calculated based on the bitrate requirements of each version assigned to the group). In such cases, those that have requested the content in a version with a higher bitrate requirement may obtain the content with a lower quality downgrade, compared to the example where the representing version is the one with the minimal bitrate requirement.

In such cases, at least one requester has requested a version of the group with a lower bitrate requirement than the version obtained in step S4. In some cases, the content may be provided to the requester using a bitrate that exceeds that of the version of the content indicated in the request, at least temporarily, without causing an interruption in the reproduction of the content. But in case of risk of an interruption, a device that obtains the content in the version of the content representing the group in step S4 can generate a new version of the content by lowering the bitrate requirement, using a downscaling technique (e.g. if the device comprises data processing means). The new version with the lower bitrate requirement can then be provided to the requester with a lower risk of causing an interruption in the reproduction of the content.

With reference to figure 2, the group G2 can be represented by the version V2 instead of the version V3, thus with a higher bitrate requirement. During step S4, the content is obtained in the version V1 (for the group G1) and in the version V2 (for the group G2). For the requester of the request R4, a new version V' of the content can be generated using a downscaling technique on the obtained content in the version V2. This new version V' can have, for example, a bitrate requirement equal to that of the version V3 or lower than that of the version V3. For the device that transmitted the request R4, the content is provided in the new version V' using a supported bitrate requirement.

Optionally, in the method of the present embodiment, each group corresponds to a respective interval of bitrate values.

Each interval can be defined by a single limit (a lower limit indicating a minimal bitrate corresponding to the group, or an upper limit indicating a maximum bitrate corresponding to the group), or by two limits (a lower limit and an upper limit). Thus, instead of defining an interval, a limit (or two limits) of bitrates may be defined for the group.

By way of non-limiting example, a first group may correspond to a bitrate interval of 1Mbps to 4Mbps, while a second group may correspond to an interval for each bitrate exceeding 4Mbps.

In this way, the versions indicated in the requests are assigned to one of the groups based on the respective bitrate requirement. Since each group has a respective interval, each version can correspond to a single group.

Optionally, in the method of the present embodiment, the respective interval of bitrate values of at least one of the groups is predefined. In other words, said at least one of the groups is defined statically, and the interval of bitrate values is not modified when the method is used (or between subsequent executions of the method).

As a result, no data processing to define the groups is necessary to implement the method, thereby reducing data processing requirements.

Optionally, in the method of the present embodiment, the respective interval of bitrate values of at least one of the groups is defined dynamically.

In other words, the interval of bitrate values for said at least one of the groups (a "dynamic" group) may change between two subsequent executions of the method for the same content. For example, in a first execution of the method where a first part of the content is requested, a group may have a first interval. Then, in a second execution of the method where a second part of the content is requested, the interval of the group can be modified.

Preferably, the interval of a dynamic group is determined based on at least one of: the respective version indicated by each of the plurality of requests received, a measure indicating the conditions of the network, and the data associated to a list of segments of the audiovisual content.

In such cases, the interval depends on the actual conditions of the input band and/or the configuration of the content segments, and is therefore more adapted to the current situation in the network and/or to the content itself. In such cases, the interval of bitrate values for said at least one of the groups may be defined as variable.

The interval of a dynamic group can be determined based on the versions corresponding to the active requests at a given instant or in a given time interval. For example, the interval is recalculated every X seconds/minutes, and/or when the number of requests varies beyond a certain threshold, and/or at set times (for example, at certain broadcasts or live streaming).

The interval of a dynamic group can also be determined based on a prevailing condition in the network, detected on the basis of the measure (e.g. by speed and/or latency tests).

The interval of a dynamic group can also be determined based on how the content is divided into segments. This division is detailed in data associated to a list of segments of the audiovisual content, i.e. based on data present in a manifest file obtained from the audiovisual content provider. From the data in the manifest file, it can be estimated how the sequence of segments will be requested by a user, for example the request frequency, a number of segments indicated in each request, etc. The data associated to a list of segments of the audiovisual content therefore helps understand how the request can be regrouped with requests by the same content but in different versions.

In some cases, at least one of the groups may have a predefined interval of bitrate values (i.e., predefined group), and at least one other of the groups may have an interval of bitrate values that is defined dynamically (i.e., dynamic group).

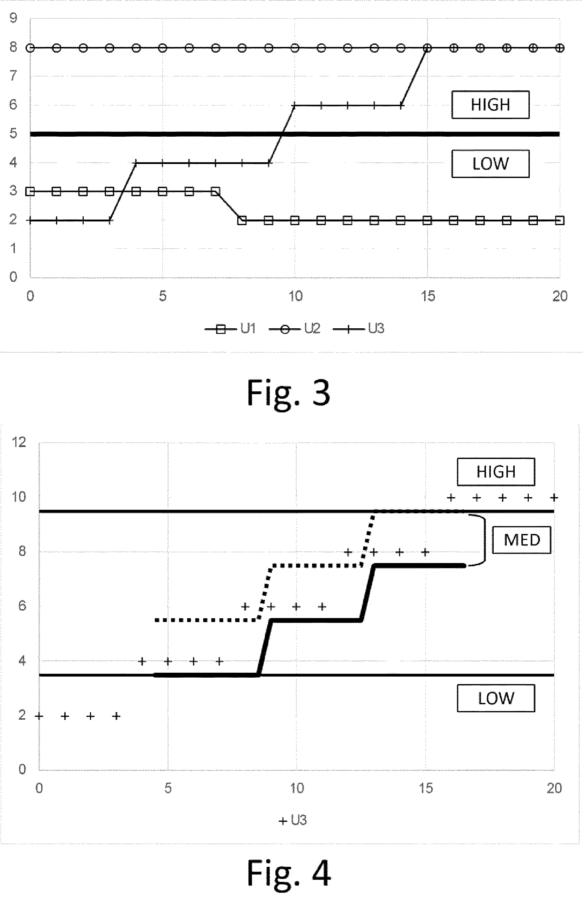

With reference to figures 3 and 4, examples of intervals of bitrate values for predefined and dynamic groups will now be illustrated.

Figure 3 demonstrates three sequences of received requests (within a time frame indicated from 0 to 20 on figure 3) by three requesters U1, U2 and U3, in a context in which two groups are predefined: the first group ("LOW") for bitrates of less than 5 Mbps, and a second ("HIGH") for bitrates of 5Mbps and more. With each request, a requester may request a set of one or more of the segments for the audiovisual content, so as to receive the subsequent segments to be reproduced according to the sequence and not yet received.

The requests received from U1 remain at a low bitrate requirement, between 2-3 Mbps (and therefore always below the 5Mbps limit). This may indicate a problem in the connection of U1, for example that a communication capacity of a device used by U1 is limited, etc. The subsequent requests of U1 are all assigned to the LOW group. U1 then receives the content in the version representing the LOW group.

Otherwise, the requests received from U2 remain at a high bitrate requirement (e.g. 8Mbps) and are therefore assigned to the HIGH group. U2 receives the content in the version representing the HIGH group.

In the case of U3, the requests indicate versions with a bitrate requirement that increases subsequently; this may be, at least in part, a consequence of the requests being regrouped because it frees up a part of the input band and therefore improves the conditions of the network from the point of view of U3. At the beginning, the requests of U3 indicate a version with a bitrate requirement of 2Mbps that are assigned to the LOW group. In response to these requests, U3 receives the content in the version representing the LOW group (as U1).

At some point, U3 requires segments of the content in a version with a bitrate requirement of 6 Mbps, and thus surpasses the limit between the LOW and HIGH groups. At this point, the requests of U3 are assigned to the HIGH group, and then U3 starts receiving content in the HIGH group version (as U2). With a higher bitrate, U3 can reproduce this part of the content with a higher quality than when it received the content in the version of the LOW group (e.g. with a higher resolution, with a higher frame rate, etc.).

Figure 4 demonstrates the sequence of received requests (within a time frame indicated from 0 to 20 on figure 4) by the requester U3, in a context in which a group ("MED") is defined dynamically, in addition to the two predefined groups, "LOW" for bitrates of less than 3.5Mbps and "HIGH" for bitrates of 9.5Mbps and more.

In the example of figure 4, when the bitrate requirement of a request of U3 exceeds 3.5Mbps (and thus no longer falls within the interval of the LOW group), the MED group is defined for an interval that includes the bitrate of the version indicated in the request. For example, if the new request indicates a bitrate of 4Mbps, an interval of 3.5Mbps to 5.5Mbps is defined for the MED group.

Subsequently, when U3 requests the content in a version with a bitrate requirement that exceeds the upper limit of the MED group, the interval of the MED group is redefined as 5.5Mbps to 7.5Mbps, and once exceeded again by the requested bitrate, the interval of the MED group is redefined as 7.5Mbps to 9.5Mbps.

In the example of figure 4, the groups may be omitted, and replaced with at least one dynamic group.

More generally, in the examples of figures 3 and 4, the predefined groups may be in any number (zero, one or more), and the dynamic groups may be in any number, as long as there is a plurality of groups.

Optionally, in the method of the present embodiment, the bitrate interval of at least one of the groups has a respective length less than a predetermined threshold.

The threshold indicates a length of the interval, and not a threshold among intervals of different groups. In case there are more than one group with a limited interval (i.e. a "limited group"), each "limited" interval may have a certain threshold or a same threshold may be used for more than one group (e.g. all groups are limited to an interval of 3Mbps). A threshold for the length of an interval can be predefined (statically), or it can be determined dynamically. In the second case the method may comprise the step of (dynamically) determining the threshold for at least one limited group and the step of limiting the length of the interval to the determined threshold (or of verifying that the bitrate interval of the limited group does not exceed the determined threshold).

In this way, all versions assigned to the group with such a limited interval have similar bitrate requirements, and the same version of the content can be provided in step S5 without a major difference among the versions indicated in the requests and the version provided.

Optionally, in the method of the present embodiment, the predetermined threshold corresponds to a maximum difference between the respective bitrate requirement of two versions of the content corresponding to the same group.

Optionally, in the method of the present embodiment, one of the groups corresponds to a minimal bitrate requirement among the versions of the content.

This "minimal" group may correspond to a minimal supported configuration, to serve content requesters with limited data transmission/reception and/or data processing capacity. The minimal group has a defined interval only with an upper bitrate limit. The LOW groups illustrated in figures 3 and 4 are examples of a predefined minimal group, but the upper bitrate limit of the minimal group can be determined dynamically, for example based on the requests received.

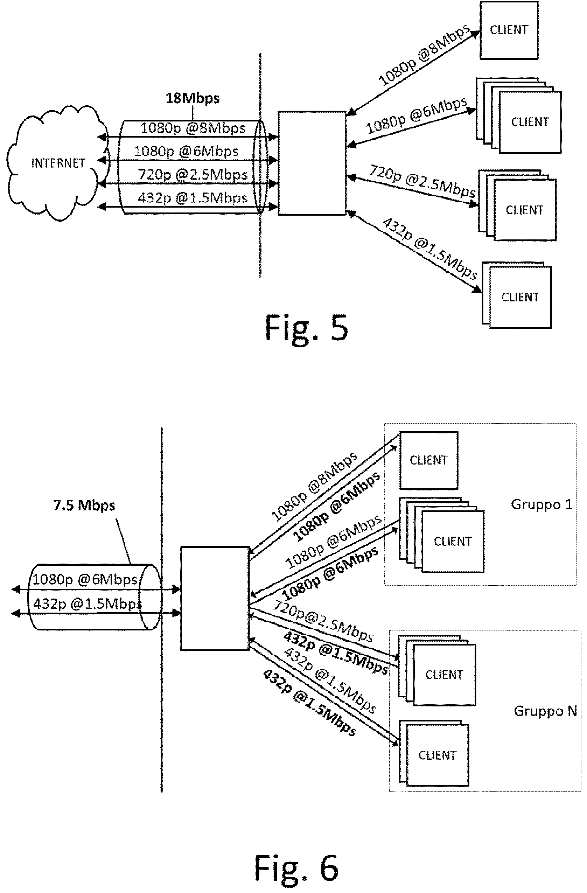

With reference to figures 5 and 6, an effect of the method of the present embodiment will now be illustrated.

Figure 5 illustrates a situation that occurs with a prefigurative technique. In this example, four versions of a content are requested, a first one with a resolution of 432p and a bitrate of 1.5Mbps, a second one with a resolution of 720p and a bitrate of 2.5Mbps, a third one with a resolution of 1080p and a bitrate of 6Mbps, and a fourth one with a resolution of 1080p and a bitrate of 8Mbps.

A cache layer can be used to transform the requests of all clients requesting the third version of the content (1080p @6Mbps) into a single request to the CDN network, but in order to obtain the content in all these four versions, an overall bitrate of 18Mbps (8 + 6 + 2.5 + 1.5) is still needed in the input band. This can saturate the input band, limiting the use of the input band for other services/users and deteriorating the quality of services provided.

In comparison, figure 6 illustrates a situation according to the method of the present embodiment. In the example of figure 6, the first version and the second version of the content are assigned to a first group (Group N), and the third and fourth versions of the content are assigned to a second group (Group 1). For simplicity, figure 6 illustrates only two groups, but the invention is not limited to a particular number of groups. Three groups (as described with reference to figure 4) or more groups may be used. In other words, N groups can be used, wherein N is a number greater than 1.

For both groups, the version with the lowest bitrate requirement among those assigned to the group is determined as the version representing the group. So, the first group has the version with a resolution of 432p and a bitrate requirement of 1.5Mbps, and the second group has the version with a resolution of 1080p and a bitrate requirement of 6Mbps. In step S4, the content is only obtained in these two versions, with an overall bitrate of 7.5 Mbps (6 + 1.5), thus limiting the use of the input band. As illustrated in figure 6, the response to the request for content in the second version includes the content in the first version with a resolution of 432p instead of the requested 720p and the response to the request for content in the fourth version includes the content in the third version with the requested resolution but a lower bitrate requirement.

As a result, bandwidth usage towards the requesters of the content is also reduced accordingly, using only 6Mbps towards the requester of the content in the fourth version instead of the requested 8Mbps, and only 1.5Mbps towards the requester of the content in the second version instead of the requested 2.5Mbps.

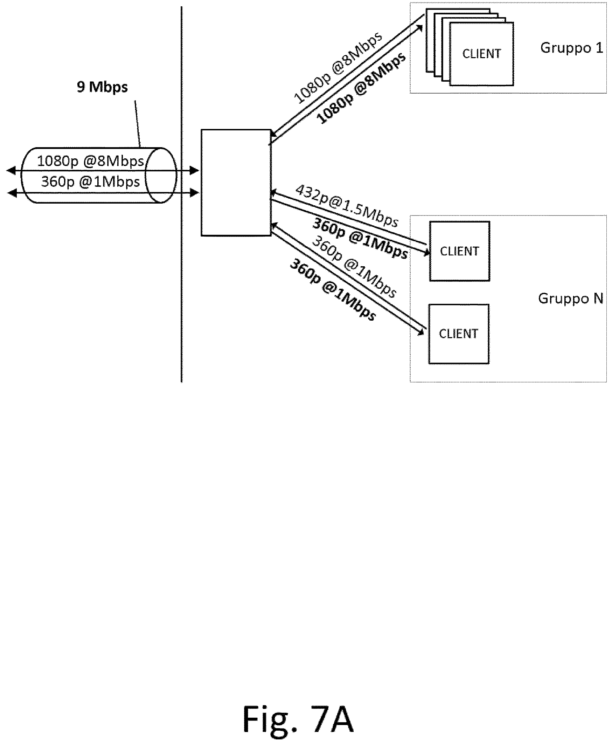

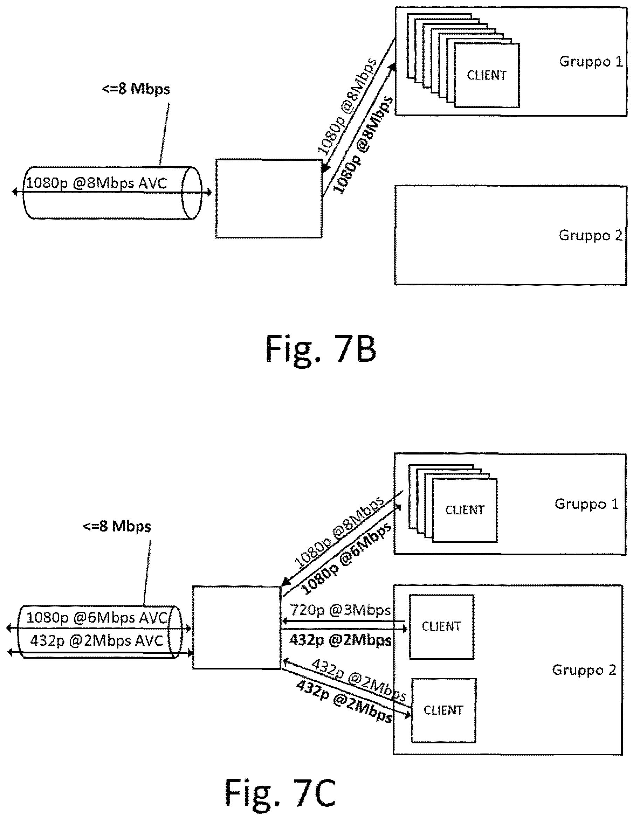

With reference to figures 7A, 7B, and 7C, a technical effect of the method of the present embodiment will now be illustrated. The regrouping of requests and the use of a single version per group reduces the use of the input band to the CDN network and also towards the requesters (from the point of view of the device executing the method), improving network conditions. Content requesters note this improvement and consider that the network supports the transmission of content at a higher quality, in other words using a version with a higher bitrate requirement. This leads, at full capacity, to the convergence of the requests from the requesters towards the versions of the content assigned to the same group.

While figure 6 corresponds to an example of the requests obtained for a first part of the content (e.g. a number of segments), figures 7A, 7B and 7C correspond to different examples of the requests obtained by the same requesters, but for a second part of the content, to be reproduced after the first part of the content.

In the example of figure 7A, for most requesters, their requests are shifted towards the version with the highest bitrate requirement (the fourth version with a resolution of 1080p and a bitrate requirement of 8Mbps). The two requesters have remained in the low group for reasons associated with these individual requesters (e.g. the performance of their devices and/or the network conditions encountered by these requesters) and not due to a block in the local network or in the input band.

The version representing the highest group is also changed from the third version (1080p@6Mbps) to the fourth version (1080p@8Mbps) because all requests indicate the fourth version. This causes an increase in bandwidth usage from 7.5Mbps (on Figure 6) to 9Mbps in figure 7A, but for most requesters, content is provided in the highest version (and therefore quality).

Figure 7B illustrates an example of a total convergence that could happen at full capacity. In this case, all requests indicate the highest version and are assigned to the highest group.

In some cases, for example in case the disparity among the requested versions of the content disappears, as in the case of a total convergence, the assignment of the requests in the groups and/or the determination of the version may be omitted. In other words, the method may comprise a step of determining whether the plurality of requests received in step S1 indicates a predetermined number of the versions of the content (e.g. two or three versions), and of executing steps S2 and S3 only if at least the predetermined number of the versions is indicated. In the other case (if there are fewer versions indicated than the predetermined number), steps S2 and S3 are omitted and the content is obtained and provided to the requesters in the respective version requested by each of them.

Optionally, in the method of the present embodiment, an overall bitrate value is determined, and at least one of the number of groups and the respective representative version of each group is determined to limit a sum of the bitrate requirement of the respective representative version of each group to the total bitrate value.

With the use of an overall bitrate value, the use of the input band for obtaining the content in the different versions can be limited so as to prevent the input band from being saturated.

Generally, the overall bitrate used with the method in the present embodiment corresponds to the sum of the bitrate requirements of the versions representing each group. The number of determined groups defines how many bitrate requirements have to be summed. So the overall bitrate can be lowered by using fewer groups. Similarly, if a group has two assigned versions of the content, changing the representative version of the group from the one with the highest bitrate requirement to the other reduces the overall bitrate accordingly.

With reference to figure 7C, an example of use of a limit for the overall bitrate will be explained. In the example of figure 7C, a value of 8Mbps is determined for an audiovisual content.

The highest group has two assigned versions of the content: (1080p @ 8Mbps) and (1080p @ 6Mbps), and the lowest group has two assigned versions of the content: (720p @ 3Mbps) and (432p @ 2Mbps). The combination of (1080p @ 6Mbps) and (432p @ 6Mbps) is chosen as the one that meets the limit for the overall bitrate. More generally, the chosen combination is the one that comes closest to the overall bitrate limit without exceeding it allowing all groups to receive the content.

Optionally, in the method of the present embodiment, each of the plurality of requests originates from a respective user device. These requests are directed to a same device that executes the method of the present embodiment.

Optionally, in the method of the present embodiment, a respective plurality of segments to be reproduced in sequence is defined for each version of the content, and wherein each request indicates one or more of the segments in the corresponding version.

The respective plurality of segments to be reproduced may be defined in a list, for example in a manifest file. A user device (or other requester) uses the manifest file to make subsequent requests for subsequent segments of the content.

Optionally, in the method of the present embodiment, obtaining the content in the representative versions of each group comprises the steps of:
- transmitting, to a server of a content distribution network, a request for the content in the representative version, and
- receiving the content in the representative version from the server.

These data exchanges are executed on the input band between the local network and the audiovisual content provider (the content distribution network, i.e. CDN network).

Optionally, in the method of the present embodiment, the plurality of groups is fewer in number than the plurality of versions starting from the moment in which a number of requests corresponding to two or more versions of the content, preferably three or more versions of said content, has been received.

In other words, more than one requested version (and therefore more than one request) for the content is assigned to at least one of the groups.

This does not exclude the possibility that, at some point during the transmission of the audiovisual content, the number of requests momentarily corresponds to only one version, for example during an initial step of the transmission of the audiovisual content, or in the case of a temporary block in the local or communication network.

Optionally, two different versions of the audiovisual content are assigned to a first one of the groups and a version of the audiovisual content is assigned to a second one of the groups.

In this way, the content is obtained in only one of the two versions assigned to the first group, lowering the requested bitrate.

Optionally, in the method of the present embodiment, each group is to regroup requests corresponding to two or more versions of said content. In other words, each group is designed or configured to regroup two or more versions, without forgetting the fact that at certain times it may contain only one version, for example in the initialization steps or if there is temporarily only one request or only requests for only one version.

The groups are configured to accommodate at least two versions of the same content. This does not mean that there can be moments when there is only one user.

Optionally, in the method of the present embodiment, the plurality of groups is fewer in number than the plurality of received requests.

This refers here to the plurality of requests for content that have been received together (almost simultaneously or within a predefined time frame).

Optionally, in the method of the present embodiment, the method further comprises the step of determining whether a sum of the respective bitrate requirements for each of the plurality of requests exceeds a predetermined value, and the steps of determining (S2) the respective group version representing the content, assigning (S3) each received request to a respective group, obtaining (S4) the content in the group versions representing each group, and providing (S5) to each requester of the content said content obtained in the version representing the assigned group are performed only in the case where the sum of the respective bitrate requirements exceeds the predetermined value.

In other words, if the sum of the respective bitrate requirements for each of the plurality of requests does not exceed the predetermined value, steps S2, S3, S4 and S5 are not performed.

In this case, it can be determined whether the audiovisual content can be provided to all requesters without exceeding the predetermined limit for use of the input band, and avoid regrouping the requests or reducing the versions in which the audiovisual content is provided unnecessarily (since the requests for the content can all be fulfilled).

Optionally, in the method of the present embodiment, if the sum of the respective bitrate requirements for each of the plurality of requests does not exceed a predetermined value, the method comprises the steps of:
- obtaining the content in the versions indicated by each request; and
- providing (S8), to each requester of the content, said content obtained in the version indicated by the request corresponding to the requester.

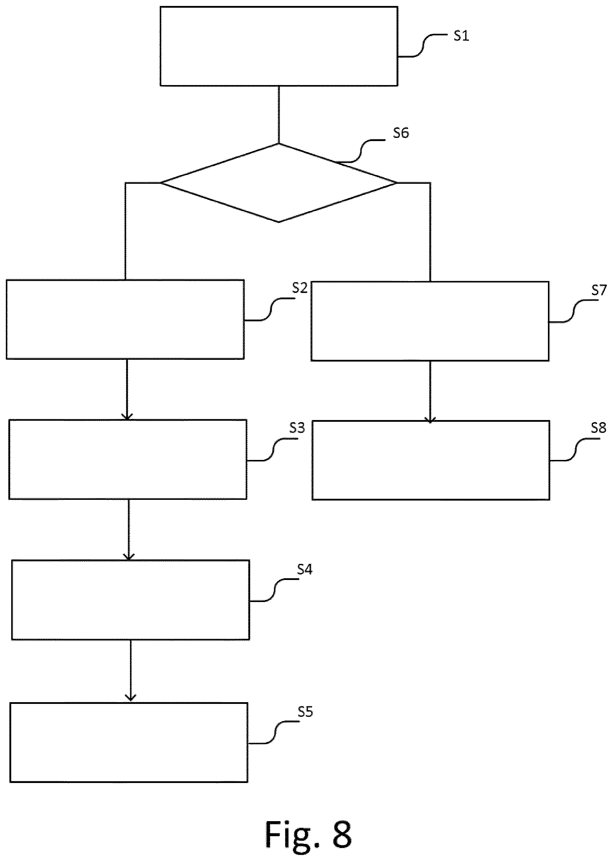

With reference to figure 8, an example of the method with optional features will be described.

When the plurality of requests is received in step S1, the method moves to step S6 where it is determined whether a sum of the respective bitrate requirements for each of the plurality of requests exceeds a predetermined value.

For example, the predetermined value may be 8Mbps illustrated in figure 7C. The sum of the respective bitrate requirements for each request is summarized (summed), and the sum obtained is compared to the predetermined value. If the sum exceeds the predetermined value, the method continues with steps S2, S3, S4 and S5 as described above.

On the other hand, if the sum does not exceed the predetermined value, the method continues with steps S7 and S8.

In step S7, for each received request, the content in the indicated version is obtained from the audiovisual content provider (e.g., CDN network or via it) via the input band. Given the determination in step S6, this is not likely to cause a saturation of the input band.

In step S8, the content is distributed to each requester, in the version in which the content was requested by that requester. Consequently, each requester can reproduce the content in the desired version (and therefore quality).

Optionally, in the method of the present embodiment, the step of receiving the plurality of requests for the audiovisual content comprises the step of temporally aligning the plurality of requests.

To receive audiovisual content, a user must first receive information about the form in which the audiovisual content is available. This information is included in a manifest file available from the content provider (for example, the CDN network). The manifest file can be updated by the CDN network. Upon receipt of a request for an audiovisual content, the CDN network may be prompted to obtain the updated manifest file. In other words, the method may comprise the step of requesting the manifest file from a provider of the audiovisual content, e.g. requesting a manifest file from a CDN network via the input band.

Different forms of manifest files exist for various protocols. Thus in some cases, the method may comprise the step of requesting a specific form of the manifest file based on the protocol to be used in the transmission of the audiovisual content.

Obtaining and/or updating the manifest file creates a delay in transmitting the manifest file to the requester. During this delay, other requests can be received that can be aligned, so as to push the simultaneous request of the same segments, in particular in the case of streaming audiovisual content, preferably when this is live (but not necessarily).

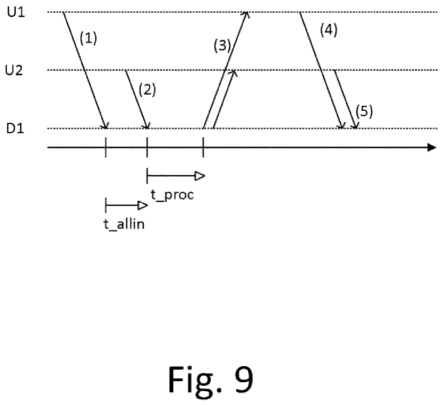

With reference to figure 9, an example of a time alignment between two requests will be described.

At a time (1), a first requester U1 requests the manifest file for an audiovisual content. Then, at a time (2), a second requester U2 requests the manifest file for the same audiovisual content. The time to process the manifest file request (and if necessary to obtain an updated manifest) is defined as *t_proc.*

In this case, the manifest file can be sent to time (3) simultaneously to both requesters U1 and U2. Instead of transmitting the manifest file to U1 as soon as possible (after a time interval *t_proc*), the transmission is delayed by an interval *t_align* to align the requests of U1 and U2.

This improves the possibility that both users U1 and U2 send respective requests (4) and (5) for the same content segments, and thus that the received requests are processed together.

Preferably, the time alignment between two of the plurality of requests is achieved by delaying a response to the request received as first.

In the example of figure 9, the response to U1 can be delayed by a predetermined time, in order to be able to regroup any requests for segments of the content of U1 with those of U2. This does not cause a decrease (or at least not a substantial decrease) in the user experience for U1 as he expects or accepts that there will be a buffering time at the start of reproduction.

In other cases, a voluntary delaying is not necessary. Since an updated manifest file is obtained for a first requester, this can be immediately forwarded to a second requester. In this way, a second request for manifest file updates from the content provider can be avoided and consequently the transmission of the manifest file to the second requester is accelerated compared to the transmission to the first requester. This improves the possibility that a request for segments of the content from the second requester is received at a time sufficiently close to a request for the same segments from the first requester.

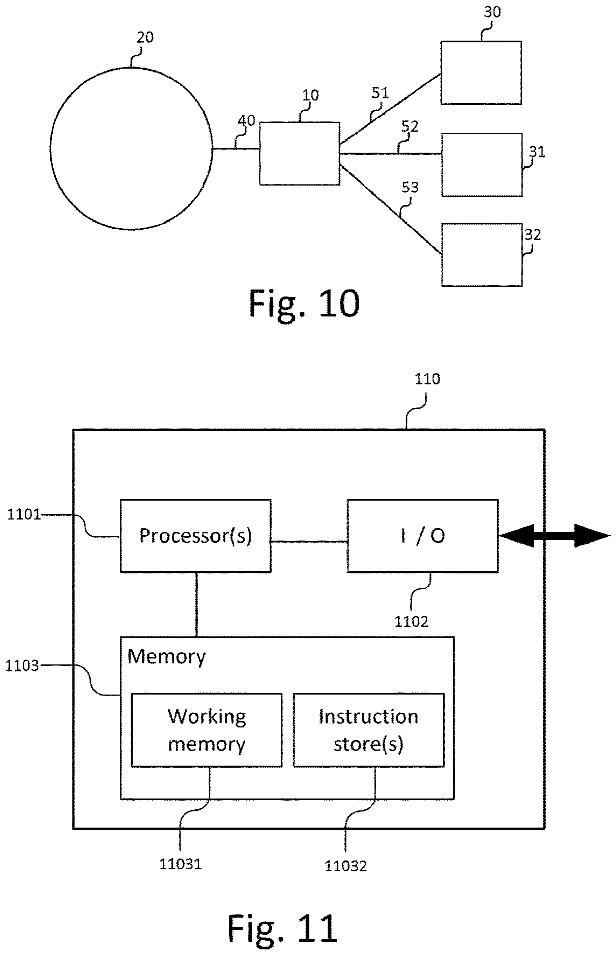

With reference to figure 10, an example of a communication network for the distribution of an audiovisual content will now be illustrated, wherein the method according to the first embodiment can be implemented.

A network device 10 is connected to a communication network 20 (e.g., a CDN network) via a connection 40 with a limited input band. Although illustrated as a single line, the connection 40 is not necessarily formed by a single link and may include more than one link in parallel and/or series. The limit in the input band occurs in at least one point between the device 10 and the network 20.

The device 10 is also connected to a plurality of (i.e. requesting) user devices 30, 31, 32, via respective connections 51, 52 and 53. The device 10, the user devices 30, 31, 32 and their connections 51, 52 and 53 form a local network, for example a network provided in a delimited place such as a building (hotel, shopping mall, office, etc.), a means of transport (train, ship, plane, bus, etc.). The connections 40, 51, 52 and 53 are not limited to a specific shape; each connection may have a different form (e.g. with/without wires, using different communication protocols, etc.). The invention is not limited to a specific number of user devices, one can in fact have more than 3, and preferably more than 10 users connected to the user device. Some of the user devices connected to the device 10 may not request the content (they may request other audiovisual contents or use other services via the connection 40).

The network device 10 may correspond to a routing device (e.g., a router or switch) provided at a utility. The device 10 may execute at least in part the method according to the first embodiment. In a particular implementation, the device 10 receives the plurality of requests from the requesters (user devices 30, 31, 32) via connections 50, 51, 52 in the local network. The device 10 can request from the network 20 the content in the versions representing each group, and obtains the content, through the connection 40. The device 10 provides the content to each requester via the local network connections.

As explained above, the method may also be executed at least in part on one or more devices in the network 20 (i.e. on the same side of the connection 40 to the network 20). The method may then be executed by a device of the network 20, for example a component of an edge server of the CDN network.

To sum up, preferably, the method according to the first embodiment is executed in an edge server of a content delivery network (CDN) and/or in a routing device provided at a utility.

In a second embodiment, a network device configured to execute the method according to the first embodiment will be described with reference to figure 11.

The device 110 is a network device, and depicts an example of the device 10 or the network device 20 in the example illustrated in figure 10. The device 110 may be a router or similar device outside of the CDN or local network. This device can be installed at a utility *(customer premise;* e.g., household, hotel, ship, etc.) in a network. This device directs traffic among the users connected to the device and the content delivery network (CDN, Internet in general, etc.).

In one embodiment, the device 110 includes at least one data processor 1101, an I/O interface 1102, and a memory 1103. The interface 1102 receives and transmits data from different devices such as the user devices and the network devices 20.

The processor 1101 is configured to execute instructions comprised in a computer program stored in the memory 1103. In executing the instructions, the processor 1101 executes the steps of the method and controls the interface in transmitting/receiving data according to the steps of the method, as described above. The memory 1103 is configured to store the computer program and may also store additional information, such as information relating to the groups (their representative versions, the defined interval, etc.), to the requests received (the information indicating the version, the identity of the device that transmitted the request, etc.).

According to another embodiment (not illustrated) there is provided a device for distributing a streaming audiovisual content available in a plurality of versions, in which each version has a respective bitrate requirement. The device comprises a reception unit for receiving a plurality of requests for the audiovisual content, each request indicating a respective version of the content. The device further comprises a determiner for determining (S2), for each group among a plurality of groups, a respective version of the content representing the group, wherein the plurality of groups is fewer in number than the plurality of versions. Furthermore, the device comprises an assigner for assigning (S3) each received request to a respective group that corresponds to the version of the content indicated by the respective request. The device further comprises an obtainer for obtaining (S4) the content in the versions of the content representing each group, and a provider for providing (S5), to each requester of the content, said content obtained in the version representing the assigned group. What has been said with reference to the method above, even in the optional aspects thereof, can be applied to the device. In one example, the device may comprise (or be part of) an edge router of the CDN, or of an apparatus installed at a utility.

In light of the above explanation, the invention may be realized by a computer program comprising instructions arranged to execute, when said program is executed on one or more data processors.

Many of the embodiments and examples have been discussed with reference to a method.

However, the disclosure may also be described or implemented in a corresponding device (or entity), and/or in a computer program to be executed on a processing entity (e.g. a computer) or on an entity whose means is suitably configured. The device (or entity) may be implemented in a single apparatus, by way of hardware (HW), software (SW) or combination thereof, or on multiple interconnected units or apparatuses (also HW, SW or combination thereof). In addition, characteristics such as reception unit, determiner (or determination unit), assigner (or assignment unit), obtainer (or obtention unit), provider (or provision unit), may be equivalently replaced by reception means, assignment means, obtention means, provision means. Each of the units described herein is intended to be made by any combination of software and/or hardware, either localized on one device or distributed across multiple devices. Of course, the above description of embodiments and examples applying the principles recognized by the inventors is given only by way of example of these principles and should therefore not be understood as limiting the scope of the patent claimed herein.

## Claims

1. Method for distributing a streaming audiovisual content available in a plurality of versions, in which each version has a respective bitrate requirement and wherein said method comprises the steps of:
- receiving (S1) a plurality of requests for the audiovisual content, each request indicating a respective version of the content;
- determining (S2), for each group among a plurality of groups, a respective version of the content representing the group, wherein the plurality of groups is fewer in number than the plurality of versions;
- assigning (S3) each received request to a respective group that corresponds to the version of the content indicated by the respective request;
- obtaining (S4) the content in the versions of the content representing each group; and
- providing (S5), to each requester of the content, said content obtained in the version representing the assigned group.

2. Method according to claim 1, wherein, for each group, the version representing the group of one of the plurality of groups corresponds to the version of the content with the minimal bitrate requirement, among the versions indicated by the requests assigned to the group.

3. Method according to claim 1 or claim 2, wherein each group corresponds to a respective interval of bitrate values.

4. Method according to claim 3, wherein the respective interval of bitrate values of at least one of the groups is predefined.

5. Method according to claim 3 or claim 4, wherein the respective interval of bitrate values of at least one of the groups is defined dynamically, preferably based on at least one of: the respective version indicated by each of the plurality of requests received, a measure indicating the conditions of the network and the data associated to a list of segments of the audiovisual content.

6. Method according to any one of claims 3 to 5, wherein the bitrate interval of at least one of the groups has a respective length less than a predetermined threshold.

7. Method according to claim 6, wherein the predetermined threshold corresponds to a maximum difference between the respective bitrate requirement of two versions of the content corresponding to the same group.

8. Method according to any one of claims 1 to 7, wherein one of the groups corresponds to a minimal bitrate requirement among the versions of the content.

9. Method according to any of claims 1 to 8, wherein an overall bitrate value is determined, and
at least one of the number of groups and the respective representative version of each group is determined to limit a sum of the bitrate requirement of the respective representative version of each group to the overall bitrate value.

10. Method according to any one of claims 1 to 9, wherein each group is to regroup requests corresponding to two or more versions of said content.

11. Method according to any one of the preceding claims, wherein the plurality of groups is fewer in number than the plurality of versions starting from the moment in which a number of requests corresponding to two or more versions of the content, preferably three or more versions of said content, has been received.

12. Method according to any one of the preceding claims, wherein each group is to regroup requests corresponding to two or more versions of said content.

13. Method according to any one of the preceding claims, wherein
the method further comprises the step of determining (S6) whether a sum of the respective bitrate requirements for each of the plurality of requests exceeds a predetermined value, and
the steps of determining (S2) the respective version of the content representing the group, assigning (S3) each received request to a respective group, obtaining (S4) the content in the versions of the content representing each group and providing (S5) to each requester of the content said content obtained in the version representing the assigned group are performed only if the sum of the respective bitrate requirements exceeds the predetermined value.

14. Method according to any one of the preceding claims, wherein the step of receiving the plurality of requests for the audiovisual content comprises the step of temporally aligning the plurality of requests.

15. Device for distributing a streaming audiovisual content available in a plurality of versions, in which each version has a respective bitrate requirement, wherein the device comprises:
reception means for receiving a plurality of requests for the audiovisual content, each request indicating a respective version of the content;
determination means for determining, for each group among a plurality of groups, a respective version of the content representing the group, wherein the plurality of groups is fewer in number than the plurality of versions;
assignment means for assigning each received request to a respective group that corresponds to the version of the content indicated by the respective request;
obtention means for obtaining the content in the versions of the content representing each group; and
provision means for providing, to each requester of the content, said content obtained in the version representing the assigned group.
